# EUROPÄISCHE PATENTSCHRIFT

(11) **EP 0 995 078 B1**
(45) Veröffentlichungstag und Bekanntmachung des Hinweises auf die Patenterteilung: **10.10.2001**
(21) Anmeldenummer: 98922790.5
(22) Anmeldetag: 30.04.1998
(51) Int. Cl.: G01C 19/72

(54) **FASEROPTISCHER KREISEL**
FIBRE-OPTIC GYROSCOPE
GYROSCOPE A FIBRE OPTIQUE

(30) Priorität: 16.07.1997 DE 19730522
(43) Veröffentlichungstag der Anmeldung: 26.04.2000
(73) Patentinhaber: LITEF GmbH, 79115 Freiburg (DE)
(72) Erfinder: HILPERT, Klaus, D-68307 Mannheim (DE); NEUKIRCH, Michael, D-68535 Edingen (DE); ECKE, Wolfgang, D-07747 Jena (DE); HANDRICH, Eberhard, D-79199 Kirchzarten (DE)
(74) Vertreter: Müller, Frithjof E., Dipl.-Ing.
(86) Internationale Anmeldenummer: EP9802572
(87) Internationale Veröffentlichungsnummer: WO9904222

(56) Entgegenhaltungen:
- EP-A- 0 454 113
- EP-A- 0 509 511
- US-A- 4 890 922
- MOONSU OH ET AL: "Open-loop fiber-optic gyroscope using intensity-modulated source and phase modulation" OPTICS LETTERS, JUNE 1988, USA, Bd. 13, Nr. 6, Seiten 521-523, XP002075324 ISSN 0146-9592

## Beschreibung

Die Erfindung bezieht sich auf faseroptische Interferometer, insbesondere faseroptische Kreisel zur Bestimmung von Drehraten, bei denen Licht aus einer vorzugsweise stabilisierten Lichtquelle, insbesondere einer Laserdiode (LD) oder einer Superlumineszenzdiode (SLD), nach zweimaliger Strahlteilung mit gleichen Lichtintensitätsanteilen in die beiden Enden einer Faserspule eingestrahlt wird. Die beiden Lichtanteile werden nach ihrem Weg durch die (in der Regel) aus polarisations- oder nicht polarisationserhaltender Monomodefaser hergestellte Spule am zweiten Strahlteiler, dem Hauptstrahlteiler, interferierend überlagert. Nach Rücklauf durch einen Polarisator wird am ersten, näher bei der Lichtquelle liegenden Strahlteiler möglichst der halbe Anteil des interferierenden Lichts ausgekoppelt und beaufschlagt einen Photodetektor, dessen Ausgangssignal nach Verstärkung und Analog-/Digitalwandlung einer Frequenzanalyse und Signalauswertung zur Gewinnung eines Drehratensignals zugeführt wird. Das faseroptische Interferometer, insbesondere Drehratensensoren mit diesem prinzipiellen Aufbau sind sowohl in Open-Loop-Anordnung als auch mit geschlossener Regelschleife, also als Closed-Loop-Anordnung bekannt. Zur Erhöhung der Meßempfindlichkeit ist es auch bekannt, den die Faserspule durchsetzenden Lichtstrom in der Phase so zu modulieren, daß der Arbeitspunkt für die Signalauswertung stets im Kennlinienbereich maximaler Meßsignaländerungen bei einer Änderung der Drehrate liegt. Diese Modulation kann periodisch oder statistisch verteilt erfolgen.

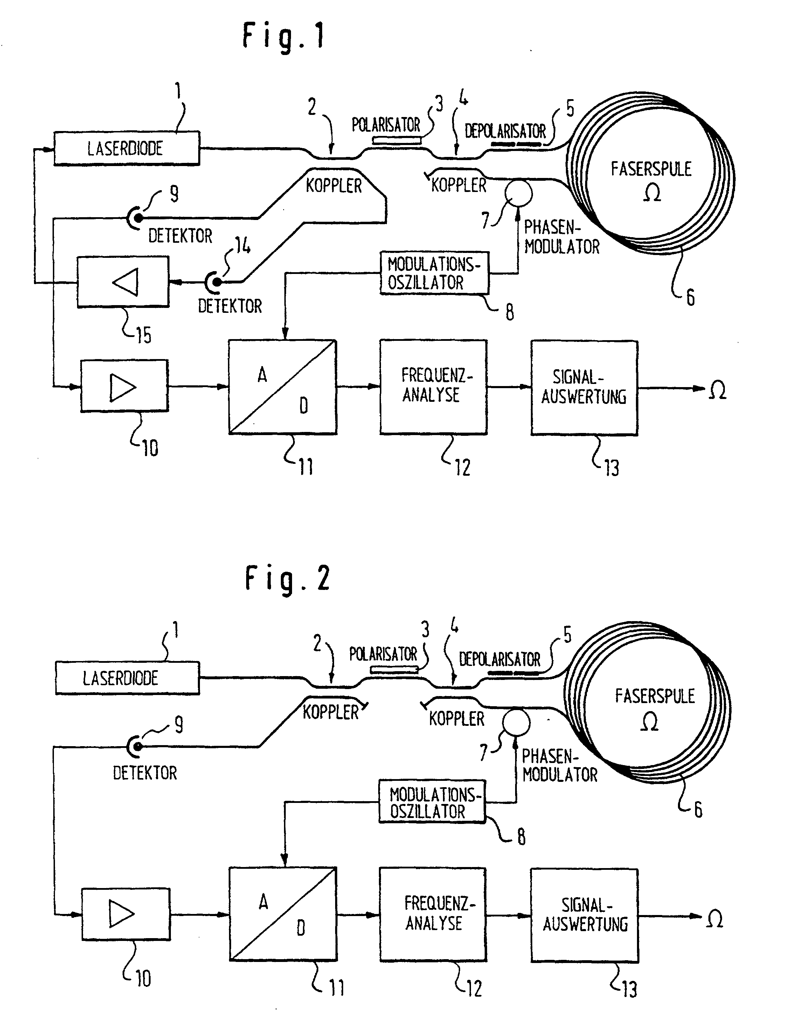

Die Fig. 2 veranschaulicht den typischen bekannten Aufbau eines Sagnac-Typ-Faserkreisels in Open-Loop-Anordnung. Das Licht einer hinsichtlich Intensität und Wellenlänge stabilisierten Lichtquelle, insbesondere einer SLD gelangt über eine Faserstrecke auf einen ersten Strahlteiler 2, von dort über einen Polarisator 3 auf einen zweiten Strahlteiler, den Hauptstrahlteiler 4. Von den beiden der Lichtquelle 1 abgewandten Aus-/Eingängen gelangen die durch Strahlteilung entstandenen Teillichtströme auf die beiden Ein-/Ausgänge einer Faserspule 6, wobei zwischen den Aus-/Eingängen des Hauptstrahlteilers 4 bzw. den Ein-/Ausgängen der Faserspule 6 einerseits ein Depolarisator 5 und andererseits ein Phasenmodulator 7 angeordnet sind. Der Depolarisator 5 dient bei Verwendung von nicht polarisationserhaltender Monomodefaser dazu, die Interferenzfähigkeit des Lichtes sicherzustellen; er entfällt, wenn polarisationserhaltende Faser verwendet wird. Der Phasenmodulator 7 wird durch einen Modulationsoszillator 8 angesteuert, der die Phase des für die Signalauswertung vorgesehenen Lichtanteils periodisch oder nach einem bekannten quasi-stochastischen Modulationsverfahren jeweils in einem Arbeitspunkt maximaler Empfindlichkeit hinsichtlich einer Drehung der Faserspule 6 um ihre Achse verschiebt. Die im Hauptstrahlteiler 4 nach Durchlaufen der Faserspule 6 interferierenden Lichtanteile durchlaufen wiederum den Polarisator 3 und werden über den ersten Strahlteiler 2 zu einem möglichst großen (halben) Anteil auf einen Photodetektor 9 geleitet, dessen Ausgangssignal zunächst in 10 verstärkt und in bestimmter Weise gefiltert, sodann in 11 A/D-gewandelt und anschließend in 12 einer Frequenzanalyse und einer Signalauswertung 13 zur Gewinnung des Drehratensignals Ω zugeführt wird.

Die Genauigkeit eines Faserkreisels - insbesondere bei Open-Loop-Konfiguration - hängt unter anderem von der Skalenfaktorstabilität ab. Der Skalenfaktor seinerseits bzw. dessen Stabilität ist unter anderem von den Eigenschaften der Lichtquelle abhängig. Um die Lichtquelle hinsichtlich ihres Nullpunktes bzw. gegen Wellenlängenänderungen aufgrund verschiedener Ursachen, wie Umwelteinflüsse, alterungs- und herstellungsbedingte Schwankungen usw. zu stabilisieren sind erhebliche Anstrengungen unternommen worden, wofür die Druckschriften DE 40 37 118 C1, DE 38 05 905 C2 sowie EP 0 611 950 B1 als ausgewählte Beispiele dienen mögen.

Es wurde jedoch festgestellt, daß solche Bemühungen zur Stabilisierung der Lichtquelle bzw. durch Kompensation von Lichtquellenwellenlängenänderungen nicht ausreichen, um den Skalenfaktor - soweit die Lichtquelle diesen beeinflußt-ausreichend stabil zu halten, wenn eine bestimmte Meßgenauigkeit verlangt wird.

Bei Closed-Loop-Aufbau andererseits bereiten vor allem zwei Einflußgrößen, nämlich die Nullpunktdrift (Biasdrift) und das Signalrauschen (Random Walk) im Meßsignal. verursacht vor allem durch die elektrische Ansteuerung der Lichtquelle und durch Übersprechen der Modulationsspannung am I/O-Chip auf die Lichtquellenelektronik, besondere Genauigkeitsprobleme.

Der Erfindung liegt damit die Aufgabe zugrunde, die Stabilität des Skalenfaktors eines faseroptischen Sagnac-Interferometers, insbesondere eines Faserkreisels in Open-Loop-Aufbau, bzw. die reproduzierbare Genauigkeit eines Faserkreisels in Closed-Loop-Anordnung hinsichtlich der Einflüsse der Nullpunktdrift und des Random Walk zu verbessern.

Um den Skalenfaktorfehler bei Open-Loop Faserkreiseln gering zu halten, wurde zunächst die Verwendung eines optischen Isolators untersucht. Die Ergebnisse waren jedoch aufgrund zumindest teilweise fehlender Reproduzierbarkeit nicht befriedigend. Aber auch aus Kostengründen wurde dieser Lösungsansatz als wenig erfolgversprechend eingestuft.

Es wurde jedoch auch beobachtet, daß das vom Interferometer zurückkommende Licht, das zu einem gewissen Anteil reflektiert wird und zurück in das Interferometer gelangt, den Skalenfaktor verschlechtert. Diese Rückstreuung oder Reflexion kann z.B. an der Lichtquelle und/oder am Detektor erfolgen und hängt vom Aufbau ab. Meist nicht vermeidbar sind Rückstreuungen an der Lichtquelle, z.B. durch Beeinflussung der abgegebenen Lichtleistung durch das vom Interferometer zurückkommende Licht. Daraus folgt die Erkenntnis, daß der zum Interferometer (z.B. von der Lichtquelle aus) zurückgestreute Anteil an moduliertem Licht beseitigt werden müßte, und zwar entweder durch Unterdrückung oder durch Kompensation. Als weitere Ursache der Lichtmodulation wurde erkannt, daß bei kompakten Aufbauten ein Übersprechen der Modulationsspannung in die Lichtquellenelektronik unvermeidlich ist und zu einer Modulation der Lichtintensität führt.

Auf dieser Erkenntnis basierend entstand die technische Lehre der Erfindung dahingehend, daß zur Erhöhung der Skalenfaktorstabilität bei Faserkreiseln in Open-Loop-Anordnung die Lichtquelle mit einem kleinen Modulationsstrom zu beaufschlagen sei, dessen Phasenlage so geregelt wird, daß das das Interferometer durchsetzende Licht unmoduliert bleibt, also keinen Modulationsanteil enthält. Dabei ist die Phasenlage und die Amplitude des Modulationsstroms zu regeln.

Für Faserkreisel mit Signalrückstellung, also mit geschlossenem Regelkreis, läßt sich mit dem gleichen Prinzip einer kompensierenden Modulation der Lichtquelle eine erhebliche Reduzierung der Nullpunktdrift und/oder des Random Walk erreichen.

Ein Faserkreisel vom Sagnac-Typ. bei dem eine Stabilisierung gemäß der Erfindung erfolgt, ist Gegenstand des Patentanspruchs 3.

Die Erfindung und vorteilhafte Einzelheiten werden nachfolgend unter Bezug auf die Zeichnungen in einer beispielsweisen Ausführungsform näher erläutert. Es zeigen:
- **Fig. 1**: den prinzipiellen Aufbau eines Faserkreisels vom Sagnac-Typ in Open-Loop-Anordnung mit Regelung der Lichtquelle gemäß der Erfindung;
- **Fig. 2**: den bereits erläuterten prinzipiellen Aufbau eines bekannten Faserkreisels in Open-Loop-Technik; und
- **Fig. 3**: den prinzipiellen Aufbau eines Sagnac-Typ-Faserkreisels in Closed-Loop-Aufbau mit digitaler Rückstellung und Regelung der Lichtquelle gemäß der Lehre der Erfindung.

Bereits anhand der Fig. 2 erläuterte Teile, Abschnitte und Funktionsweisen des Faserkreiselsaufbaus gemäß Fig. 1 werden nachfolgend nicht mehr näher erläutert.

Wie oben erwähnt, ist es das Ziel der Erfindung. die Lichtmodulationen, die insbesondere in das Interferometer gelangen, hinsichtlich der Anteile von moduliertem Licht und ihres Einflusses auf die Genauigkeit der Skalenfaktorstabilität bzw. des Nullpunkts und der Einflüsse des Random Walk zu beseitigen oder zumindest erheblich zu reduzieren. In anderen Worten, es ist sicherzustellen, daß kein moduliertes Licht in das Interferometer gelangt. das stört.

Um dies zu erreichen ist gemäß der Erfindung (vgl. Fig. 1) ein die Lichtquelle 1 beeinflussender Regelkreis vorgesehen mit einem zusätzlichen Detektor 14 dessen Referenz- oder Ansteuersignal z.B. an einem ohnehin freien Aus-/Eingang des ersten Strahlteilers (Kopplers) 2 abgegriffen wird. Das Ausgangssignal des zusätzlichen Detektors 14 liefert nach Filterung und/oder Verstärkung in 15 einen im Vergleich zum die Lichtquelle 1 (Laserdiode) erregenden DC- oder Gleichstrom kleinen Modulationsanteil, der in der Amplitude und Phase so eingestellt wird, daß das Licht, das von der Lichtquelle 1 aus in die Faser und damit in das Interferometer gelangt, keinen modulierten Anteil mehr enthält.

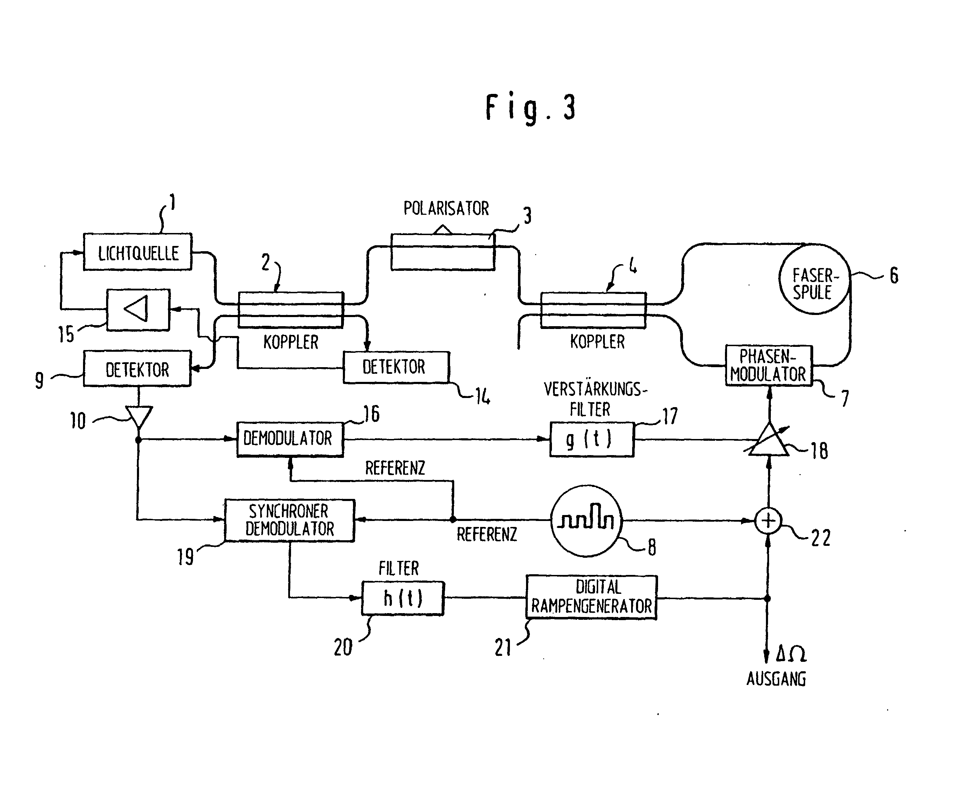

Die Fig. 3 veranschaulicht das Prinzip-Blockschaltbild eines Faserkreisels mit digitaler Rückstellung. Die auch bei dem Faserkreisel ohne Rückstellung gemäß Fig. 2 bzw. 1 vorhandenen Baugruppen und Bauteile mit gleicher oder ähnlicher Funktion sind auch bei der Darstellung in Fig. 3 mit den gleichen Bezugshinweisen versehen, so daß insoweit eine erneute Erläuterung erübrigt werden kann.

Zu den die geschlossene Regelschleife über einen Faserkreiselaufbau nach Fig. 3 bestimmenden Baugruppen gehört eine Skalenfaktorregelstrecke mit einem Demodulator 16 und einem Verstärkungsfilter 17. dessen Ausgangssignal den Verstärkungsfaktor eines den Phasenmodulator 7 ansteuernden regelbaren Verstärkers 18 bestimmt. Der Modulationsoszillator 8 liefert Modulationsmuster unterschiedlicher Höhe: Modulo-2π-Phasensprünge liefern die Referenz für den Demodulator 16, dagegen bilden Modulo-π/2-Phasensprünge die Referenz für den Synchrondemodulator 19, dessen Ausgangssignal über ein Verstärkungsfilter 20 einerseits und einen digitalen Rampengenerator 21 andererseits das Rückstellsignal bzw. das Drehratensignal ΔΩ bereitstellt. Das den Arbeitspunkt bestimmende Modulationssignal des Modulationsoszillators 8 bzw. das Rückstellsignal vom digitalen Rampengenerator 21 werden in einer Additionsstufe 22 kombiniert und bestimmen das Eingangssignal für den regelbaren Verstärker 18.

Beim Faserkreisel mit digitaler Rückstellung (Closed-Loop) wird der Skalenfaktor wesentlich durch den Phasenmodulator beeinflußt, der die Rückstellung der Sagnac-Phase vornimmt und dessen Anstellsignal durch den steuerbaren Verstärker 18 nachgeregelt wird. Dadurch ist der Einfluß der Lichtmodulation auf den Skalenfaktor vernachlässigbar. Dagegen können Lichtquellenmodulationen eine Nullpunktdrift bei periodischer Modulation und eine Erhöhung des Rauschens (Random Walk) bei statistischer Modulation bewirken. Dabei sind im allgemeinen die direkten Einkopplungen der Modulatorspannungen in die Lichtquellenelektronik dominant.

Um diese Schwierigkeiten zu beseitigen ist nach der Erfindung auch bei dem Faserkreisel mit geschlossener Regelschleife gemäß Fig. 3 an einem Aus-/Eingang des ersten Strahlteilers 2 ein weiterer Detektor 14 vorhanden, durch den ein kleines Modulationssignal nach Filterung und Verstärkung 15 auf die Lichtquelle 1 gelangt, wodurch die Lichtmodulation und damit mögliche Signalrauschanteile bzw. eventuelle Nullpunktfehler kompensierbar sind.

Erfolgreiche Versuche haben gezeigt, daß es aufgrund der Erfindung mit vergleichsweise geringen Zusatzkosten möglich ist, Faserkreisel in Open-Loop-Technik mit wesentlich besserer Skalenfaktorgenauigkeit herzustellen. Für Faserkreisel mit Rückstellung werden die Einflüsse des Random Walk reduziert und die Nullpunktstabilität verbessert. Gegenüber anderen bekannten oder vorgeschlagenen Möglichkeiten lassen sich die Gesamtkosten für einen Faserkreisel mit sehrhoher Genauigkeit reduzieren.

## Patentansprüche

1. Verfahren zur Erhöhung der Stabilität eines interferometrischen Faserkreisels von Sagnac-Typ, **dadurch gekennzeichnet, daß** die Lichtquelle (1) zusätzlich zur normalen DC-Erregung mit einem kleinen Modulationsstrom beaufschlagt wird, dessen Phasenlage so geregelt wird, **daß** das von der Lichtquelle in das Interferometer gelangende Licht unmoduliert bleibt, also keinen Modulationsanteil enthält.

2. Verfahren nach Anspruch 1, **dadurch gekennzeichnet, daß** zusätzlich zur Phasenlage auch die Amplitude des Modulationsstroms, angepaßt an die Art der verwendeten Lichtquelle, geregelt wird.

3. Sagnac-Typ-Faserkreisel mit
- einer Lichtquelle (1).
- einem ersten (2) und einem zweiten Strahlteiler (4),
- einer an die der Lichtquelle (1) und dem ersten Strahlteiler (2) abgekehrten Ausgänge des zweiten Strahlteilers (4) angekoppelten Faserspule (6).
- einem ein Ende der Faserspule (6) mit einem Modulationssignal beaufschlagenden Phasenmodulator (7), sowie mit
- einem an einen Eingang des ersten Strahlteilers (2) angeschlossenen Auswertungsdetektor (9), der das interferierende, von der Faserspule zurückkommende Licht erfaßt und dessen Ausgang auf eine Frequenzanalyse- und Signalauswerteschaltung zur Ausgabe einer Drehrate (Ω; ΔΩ) geschaltet ist,
**gekennzeichnet durch**
einen an einen weiteren Aus-/Eingang des ersten Strahlteilers (2) angeschlossenen weiteren Detektor (14), dessen Ausgangssignal nach Verstärkung als Vorgabesignal auf einen Eingang einer Verstärkungs- und Phasenregelschaltung (15) gelangt, **durch** welche die Lichtquelle (1) mit einem Modulationsstrom beaufschlagt wird, der hinsichtlich Phase und Amplitude derart abgestimmt ist, daß das in das Interferometer (2 bis 6) abgestrahlte Licht keinen modulierten Anteil enthält.

## Claims

1. A process for increasing the stability of an interferometrical fibre gyroscope of the Sagnac type, **characterised in that** the light source (1), in addition to the normal DC excitation, is acted upon by a small modulation current the phase orientation of which is adjustably controlled in such a way that the light entering the interferometer from the light source remains unmodulated and therefore contains no modulation portion.

2. A process according to claim 1, **characterised in that**, in addition to the phase orientation, the amplitude of the modulation current matched to the type of light source used is also adjustably controlled.

3. A Sagnac type fibre gyroscope having
- a light source (1),
- a first (2) and a second beam splitter (4),
- a fibre bundle (6) coupled to the outlets of the second beam splitter (4) that are facing away from the light source (1) and from the first beam splitter (2),
- a phase modulator (7) acting upon one end of the fibre bundle (6) by means of a modulation signal, and also
- an evaluation detector (9) which is connected to one inlet of the first beam splitter (2) and detects the interfering light coming back from the fibre bundle and whose outlet is connected to a frequency analysis and signal evaluation switching circuit for the output of a revolutional speed (Ω; ΔΩ),
**characterised by**
an additional detector (14) that is connected to another outlet/inlet of the first beam splitter (2) and whose output signal, after amplification, is transferred as a default signal to an inlet into an amplification and phase regulating switching circuit (15) by means of which the light source (1) is acted upon by a modulation current which, in respect of phase and amplitude, is tuned in such a way that the light radiated into the interferometer (2 to 6) contains no modulated portion.

## Revendications

1. Procédé pour augmenter la stabilité d'un gyroscope interférométrique à fibre optique du type Sagnac, **caractérisé en ce que** la source lumineuse (1) est soumise, en plus de l'excitation normale par un courant continu, à un faible courant modulateur dont la position de phase est régulée de façon que la lumière envoyée de la source lumineuse à l'interféromètre reste non modulée, c'est-à-dire ne comporte pas de fraction modulée.

2. Procédé selon la revendication 1, **caractérisé en ce que**, en plus de la position de phase, l'amplitude du courant modulateur est elle aussi régulée en fonction de la source lumineuse employée.

3. Gyroscope à fibre optique du type Sagnac comprenant
- une source lumineuse (1),
- un premier (2) et un second séparateur de faisceaux (4),
- une bobine de fibre optique (6) accouplée aux sorties du second séparateur de faisceaux (4) situées à l'opposé de la source lumineuse (1) et du premier séparateur de faisceaux (2),
- un modulateur de phase (7) envoyant un signal de modulation à l'une des extrémités de la bobine de fibre optique (6), ainsi que
- un détecteur d'évaluation (9) qui est connecté à une entrée du premier séparateur de faisceaux (2), qui intercepte la lumière interférante revenant de la bobine de fibre optique, et dont la sortie est reliée à un circuit d'exploitation de signal et d'analyse de fréquence pour fournir une vitesse de rotation (Ω ; ΔΩ), **caractérisé par** un détecteur supplémentaire (14) qui est connecté à une sortie/entrée supplémentaire du premier séparateur de faisceaux (2) et dont le signal de sortie, après amplification, parvient en tant que signal de consigne à une entrée d'un circuit d'amplification et de régulation de phase (15), par l'intermédiaire duquel la source lumineuse (1) est soumise à un courant modulateur dont la phase et l'amplitude sont harmonisées de façon que la lumière émise dans l'interféromètre (2 à 6) ne contienne pas de fraction modulée.
